# EUROPEAN PATENT SPECIFICATION

(11) **EP 2 918 526 B1**
(45) Date of publication and mention of the grant of the patent: **05.10.2016**
(21) Application number: 15158505.6
(22) Date of filing: 10.03.2015
(51) Int. Cl.: B65G 67/20

(54) **DEVICE FOR DISPLACING PRODUCT CARRIERS SUCH AS PALLETS**
VORRICHTUNG ZUM VERLAGERN VON PRODUKTTRÄGERN WIE PALETTEN
DISPOSITIF POUR DÉPLACER DES SUPPORTS DE MARCHANDISES TELS QUE DES PALETTES

(30) Priority: 11.03.2014 NL 2012402
(43) Date of publication of application: 16.09.2015
(73) Proprietor: K.I.G. Heerenveen B.V., 8449 EC Terband-Heerenveen (NL)
(72) Inventor: Knijpstra, Hette, 8449 EC Terband-Heerenveen (NL)
(74) Representative: Mink-Lindenburg, Charlotte Hildegard

(56) References cited:
- US-A- 5 082 415
- US-A- 5 186 596

## Description

The present invention relates to a device for displacing product carriers such as pallets between the device and a location, such as a vehicle, according to the preamble of claim 1.

Document US 5082415 discloses a device for displacing product carriers according to the preamble of claim 1.

A similar device is known from US4844681 and is disposed on a platform. The known device comprises a movable assembly provided with teeth which is disposed on a flat structure on a platform. The assembly is driven by carriages arranged adjacently of the teeth and driven by chains. The known device has diverse advantages. A significant advantage is that the known device can co-act with vehicles, containers and so on in order to transport pallets with goods without technical modifications of these vehicles, containers and so on being necessary. An automatic alignment moreover takes place between the known device and the floor of the location, i.e. of the vehicle, the container and so on. A considerable number of pallets can be displaced in a very short time (about three minutes) using this known device.

The invention has for its object to provide an improved device of the type stated in the preamble.

The device according to the invention has for this purpose the feature
that the device further comprises a support surface for placing of the product carriers, which support surface is provided with generally elongate openings extending substantially in the direction of displacement;
that the transport frame comprises a number of generally elongate travel surfaces for the roller means of the forks;
that the levelling means are configured to bring the travel surfaces level with the floor; and
that the device comprises third drive means for moving the travel surfaces with forks through the openings between a rest position, in which the travel surfaces with forks are situated below the level of the support surface, and a transporting position in which the forks protrude above the level of the support surface.

The device according to the invention is suitable for co-action with diverse types of product carrier. The support surface does after all provide a flat floor on which all types of pallet, rolling container and other known product carrier can be placed. The flat floor makes the device according to the invention easily accessible, whereby handling of palletized loads, including loading and unloading of the device itself, can be performed more quickly and easily, for instance with forklift trucks or pallet trucks. In addition, the flat floor with co-acting travel surfaces and openings provides a good protection for the technology present in the device. The number of possible applications of the device according to the invention is hereby increased relative to the prior art.

It is noted that a device in the technical field of the invention is known from US 3,958,701. The known device is in addition provided with a support surface formed by equidistant, parallel projections between which extend recessed longitudinal channels which form travel surfaces for the roller means of the forks. The forks are embodied with a liftable upper part. The known device has the drawback that it is intended for co-action with modified loading/unloading locations in which the same projections are present.

The device according to the present invention is described by the appended claim 1, preferred embodiments are described by the dependent claims.

In a first preferred embodiment the device comprises at least one stop intended for the purpose of positioning the product carriers on the support surface. Correct placing of product carriers on the support surface is guaranteed by means of the at least one stop, and a rapid handling of the product carriers is thereby made possible.

In a practical preferred embodiment each travel surface is provided with a straight-line guide for the roller means. The straight-line guide preferably comprises an upright edge placed substantially centrally on the travel surface for co-action with the roller means extending on either side of the edge. The straight-line guide increases the reliability of the device according to the invention.

According to a robust preferred embodiment, the roller means are pivotable between a retracted position and an extended position, and the second drive means comprise a pull rod for moving the roller means between the retracted position and the extended position.

In a further preferred embodiment the first drive means comprise a pin track and the transport frame is provided on the sides with a rail for guiding the transport sub-frame. A pin track guarantees a high precision, even after a period of time. A pin track is moreover resistant to dirt.

In an optimal preferred embodiment the levelling means are configured for automatic real-time correction of the position of the travel surfaces. The levelling means are preferably laser-controlled.

In a stationary preferred embodiment the levelling means are laser-controlled. The support surface preferably forms part of a support frame.

In a first variant of the device according to the invention the levelling means are integrated into the device. The levelling means preferably function at least partially as third drive means.

In a second variant of the device according to the invention the levelling means are present at the location. The device preferably comprises a positioning surface for a vehicle and the levelling means are configured to bring the positioning surface level with the travel surfaces.

In a third variant the device is arranged on an independently drivable vehicle.

In a fourth variant the device is provided with means for supporting on a ground surface.

In a fifth variant the device is provided with means for suspended mounting on a surface.

The levelling means are optionally configured to bring the support surface and the travel surfaces level with the floor.

The invention will now be described in more detail with reference to the figures. The same components are designated in the figures with the same reference numerals.
Figures 1A-F illustrate the general operating principle of the device according to the invention;
Figure 2A shows a longitudinal section of a first preferred embodiment of the device according to the invention;
Figure 2B shows a cross-section of the first preferred embodiment of figure 2A;
Figure 2C shows the device of figure 2A with a vehicle thereon;
Figure 3A shows a longitudinal section of a second preferred embodiment of the device according to the invention;
Figure 3B shows a cross-section of the second preferred embodiment of figure 3A;
Figure 4A shows a schematic view of a first part of the device according to the invention in more detail;
Figure 4B shows a part-sectional view of the first part of the device of figure 4A;
Figure 5A shows a schematic view of a second part of the device according to the invention in more detail;
Figure 5B shows a part-sectional view of the second part of the device of figure 5A;
Figure 6A shows a vehicle disposed close to a device according to the invention;
Figure 6B shows a cross-section through figure 6A along the line B-B;
Figure 6C shows a cross-section at the position of the line C-C in figure 6A, with the device in a different position;
Figure 6D illustrates a longitudinal section through the device of figure 6A in yet another position;
Figures 7A-7C show a third preferred embodiment of the device according to the invention;
Figures 8A-8C show a fourth preferred embodiment of the device according to the invention; and
Figure 9 shows a fifth preferred embodiment of the device according to the invention.

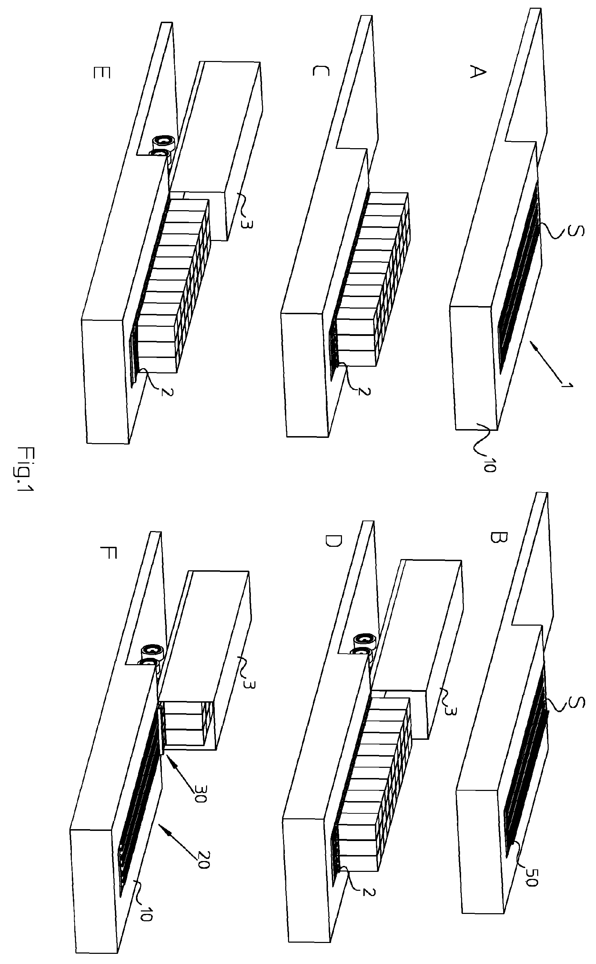

Figures 1A-1F illustrate the general operating principle of the device according to the invention. Figure 1A shows a device 1 according to the invention which is arranged in a platform or dock 10 for a vehicle. In the shown preferred embodiment the vehicle is a trailer 3. According to the invention device 1 is arranged recessed into platform 10 such that it is possible to travel over the upper side or floor of platform 10. Figure 1A shows only a support surface S of device 1 which is intended for placing of the pallets. The support surface is provided with generally elongate openings. The support surface is takes a form suitable for travel thereon.

Figure 1B illustrates a stop 50 close to the support surface of device 1.

Figure 1C illustrates pallets 2 positioned against stop 50 on the support surface of device 1. In the shown preferred embodiment the support surface is configured to receive three parallel rows of pallets 2.

Figure 1 D shows a trailer 3 which is disposed adjacently of device 1 and platform 10 for the purpose of receiving pallets 2.

Figure 1 E illustrates the levelling of device 1 relative to the loading floor of trailer 3. Device 1 comprises a transport frame 20 which can be moved upward through openings in the support surface, after which forks of a transport sub-frame 30 lift and displace the pallets into trailer 3.

Figure 1 F shows trailer 3 loaded with pallets 2. System 1 then returns once again to the situation as shown in figure 1A.

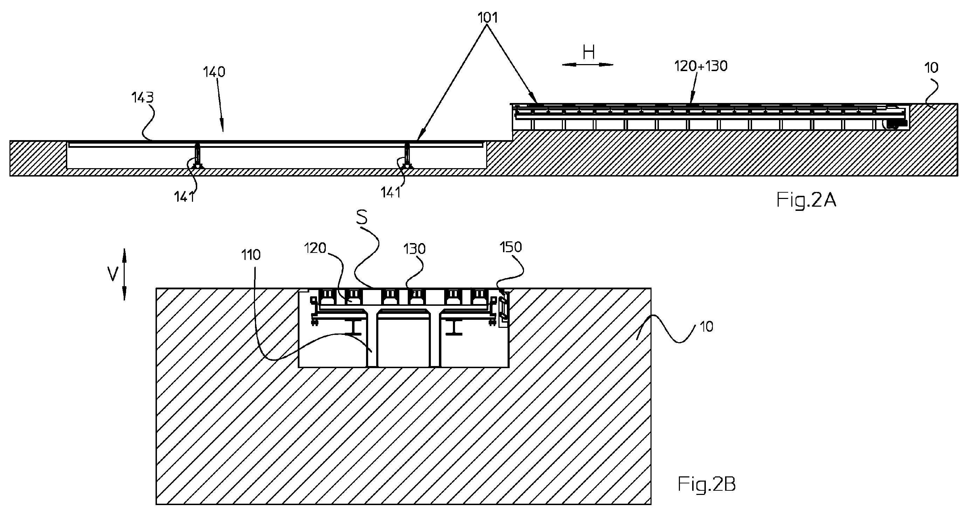

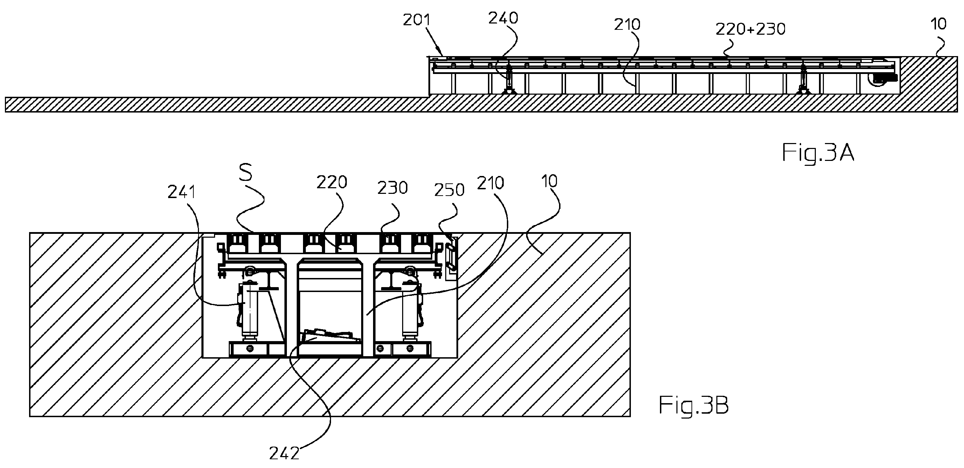

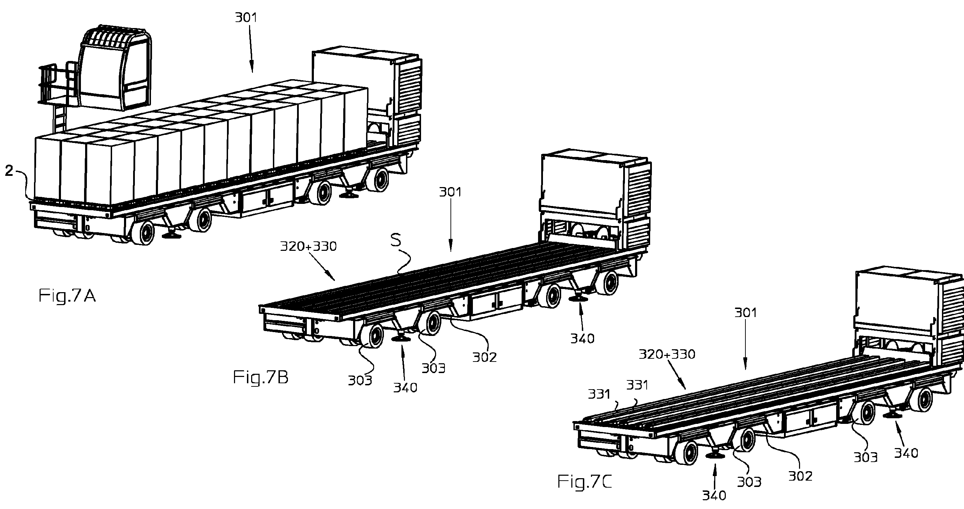

The device according to the invention is described on the basis of three preferred embodiments specified in detail. A first preferred embodiment 101 is shown in figures 2A and 2B. A second preferred embodiment 201 is shown in figure 3A and figure 3B. A third preferred embodiment 301 is shown in figures 7A, 7B and 7C.

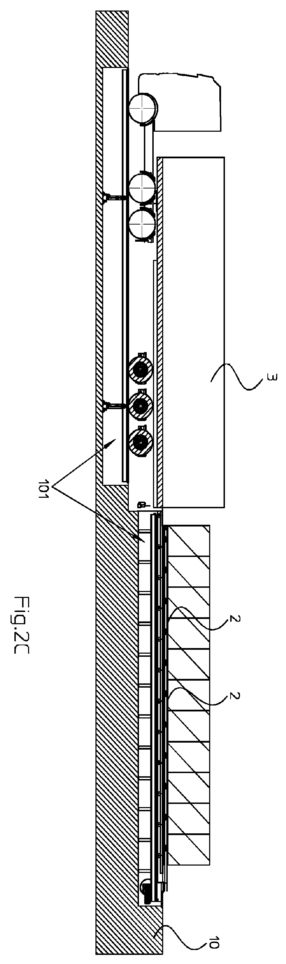

Figure 2A shows a longitudinal section of the first preferred embodiment 101 of the device according to the invention. Figure 2B shows a cross-section of device 101. Figure 2C shows the device of figure 2A with a trailer 3.

Device 101 is arranged in platform 10. Device 101 comprises a transport frame 120 which extends in the direction of displacement H. This direction of displacement extends in longitudinal direction of platform 10 between device 101 and a vehicle to be disposed adjacently of platform 10. Device 101 further comprises a transport sub-frame 130 connected to the transport frame for movement in the direction of displacement H. Device 101 further comprises a support frame or base frame 110 which comprises support surface S.

Transport frame 120 is movable in a lifting direction V which lies substantially perpendicularly of the direction of displacement H.

Device 101 further comprises a levelling system 140 for bringing transport frame 120 level with a floor of the vehicle. Levelling system 140 is arranged separately of transport frame 120 in platform 10. Levelling system 140 comprises a number of cylinders 141 and a positioning surface 143 on which trailer 3 is disposed. Levelling system 140 is configured to bring the loading floor of the trailer disposed on surface 143 level with the transport frame 120 for pallets 2.

Stop 150 is mounted on platform 10 in figure 2B, but can also be mounted on frame 110.

Figures 3A and 3B show a second preferred embodiment of the device according to the invention. Device 201 largely corresponds to device 101 and corresponding components are therefore designated with reference numerals increased by 100 relative to the reference numerals of figures 2A and 2B.

The most significant difference between the second preferred embodiment 201 and the first preferred embodiment 101 is that levelling system 240 is integrated into device 201 so that all components of device 201 are arranged at the same location in platform 10. Levelling system 240 comprises a number of cylinders 241 which support on platform 10 and engage on transport frame 220. Shown in figure 3B is a further diagonally disposed cylinder 242 which likewise engages on transport frame 220. Cylinders 241 and 242 engage such that a parallelogram construction is formed for the purpose of moving the transport frame relative to support surface S.

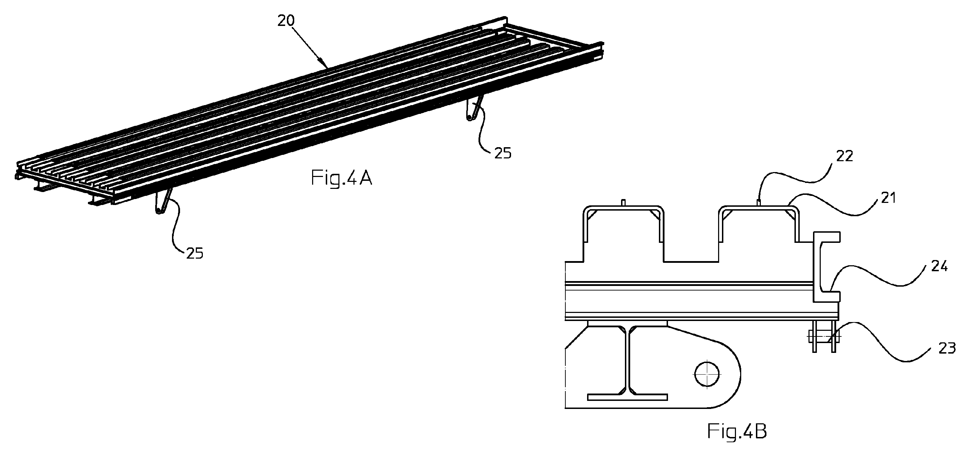

Figures 4A and 4B show the transport frame in more detail in respectively a schematic view and a part-sectional view.

In figures 4A and 4B the transport frame and the associated components are designated with numerals 20 to 25. In the other figures these reference numerals are increased by 100 in the case of device 101, by 200 in the case of device 201 and by 300 in the case of device 301.

Transport frame 20 is provided with a number of generally elongate travel surfaces 21 extending in longitudinal direction of transport frame 20. The travel surfaces are formed by the upper surfaces of a number of projections which are arranged on transport frame 20. The projections run substantially parallel at substantially equal distances from each other. The number of projections substantially corresponds to the number of forks on the transport sub-frame. In the shown preferred embodiments the projections have a generally elongate form and a generally U-shaped cross-section. In a top view the form of the travel surfaces corresponds to the form of the forks.

In the shown preferred embodiment transport frame 20 is further provided with arms 25. Arms 25 serve for the mounting on the third drive means for moving the transport frame in lifting direction V relative to support surface S. These third drive means preferably comprise cylinders, for instance cylinders 241 and 242 of levelling system 240. Separate third drive means are added by way of alternative.

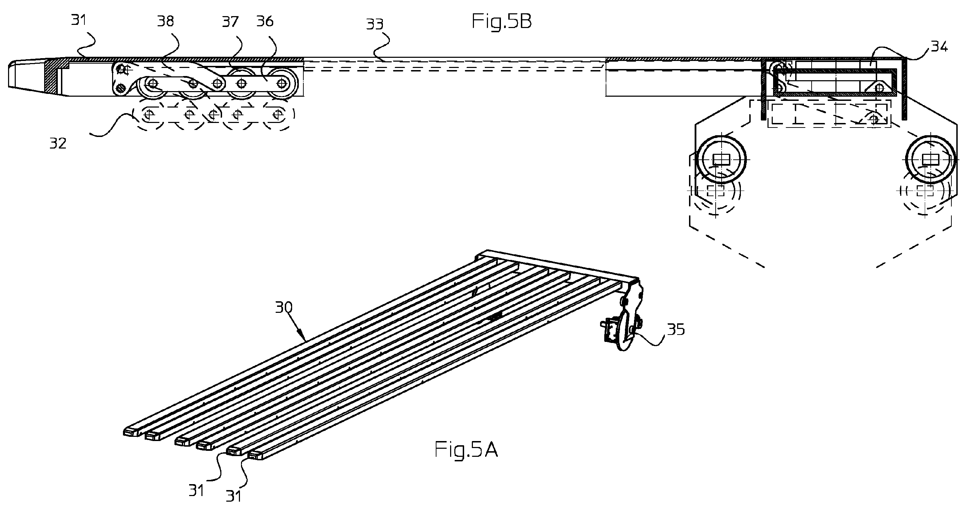

Transport frame 20 is provided on the sides with means for guiding transport sub-frame 30 (see figures 5A and 5B) relative to transport frame 20. These means preferably comprise a rail 24 for guiding transport sub-frame 30.

Each travel surface 21 is preferably provided with an upright edge 22 which is placed substantially centrally on the travel surface and serves as straight-line guide for forks 31 of transport sub-frame 30.

The first drive means for driving transport sub-frame 30 relative to transport frame 20 preferably comprise a pin track 23. Suitable drive means known in the relevant field, such as chains, gear racks and so on, can be applied as alternative to the pin track.

Figures 5A and 5B show respectively a schematic view and longitudinal section of transport sub-frame 30. The transport sub-frame is provided with forks 31. These forks 31 are configured to lift pallets 2. The use of forks for co-action with product carriers is generally known in the relevant field. Transport sub-frame 30 is provided with guide elements 35 which are configured for co-action with rail 24 on transport frame 20. Transport sub-frame 30 is further provided with sets of wheels 32. In the shown preferred embodiment the sets of wheels 32 comprise a shoe with two parallel rows of four wheels. With four wheels per row the set of wheels acquires sufficient length to span larger uneven areas and gaps. It is noted that the number of shoes and the number of wheels per row and per shoe can vary per embodiment.

Transport sub-frame 30 is provided with second drive means for lifting transport sub-frame 30 relative to transport frame 20. The sets of wheels 32 run over travel surfaces 21 and are guided by the central straight-line guide 22. Transport sub-frame 30 is provided with a pull rod 33 with drive 34 for the purpose of moving sets of wheels 32 between a retracted position and an extended position. The extended position is shown schematically in figure 5B with broken lines. The sets of wheels comprise for this purpose a first arm 36 on which wheels 37 are mounted. First arm 36 is pivotally connected to a second arm 38, which is pivotally connected to pull rod 33. Drive 34 is preferably a hydraulic cylinder.

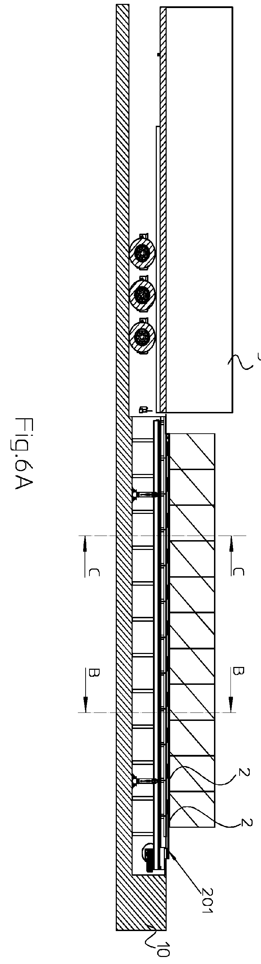

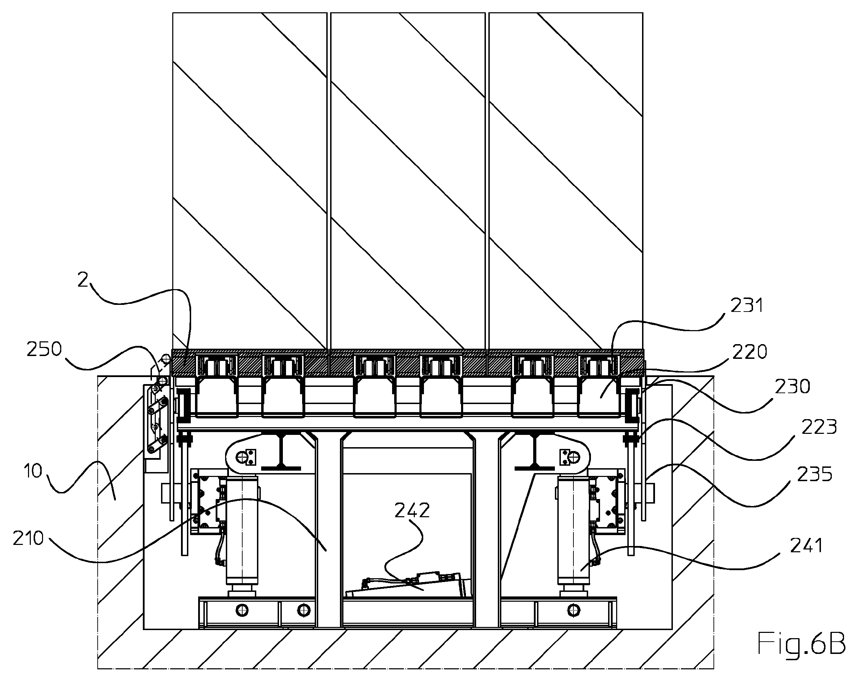

Figure 6A shows a trailer 3 which is disposed close to a device 201 on a dock 10 for loading with pallets 2. Figure 6B shows a cross-section through figure 6A along the line B-B. Figure 6B shows that travel surfaces 221 with wheels 237 of forks 231 thereon protrude through the openings in support surface S. Support surface S forms part of base frame 210 which is disposed fixedly in platform 10. Cylinders 241 and 242 of levelling system 240 are configured for an automatic levelling of travel surfaces 221 with the loading floor of trailer 3. Levelling system 240 is preferably configured for real-time correction of the position of travel surfaces 221. An optimal levelling can in this way be obtained, even during displacing of pallets 2. Levelling system 240 preferably comprises a laser and a control, such as a PLC control with suitable software.

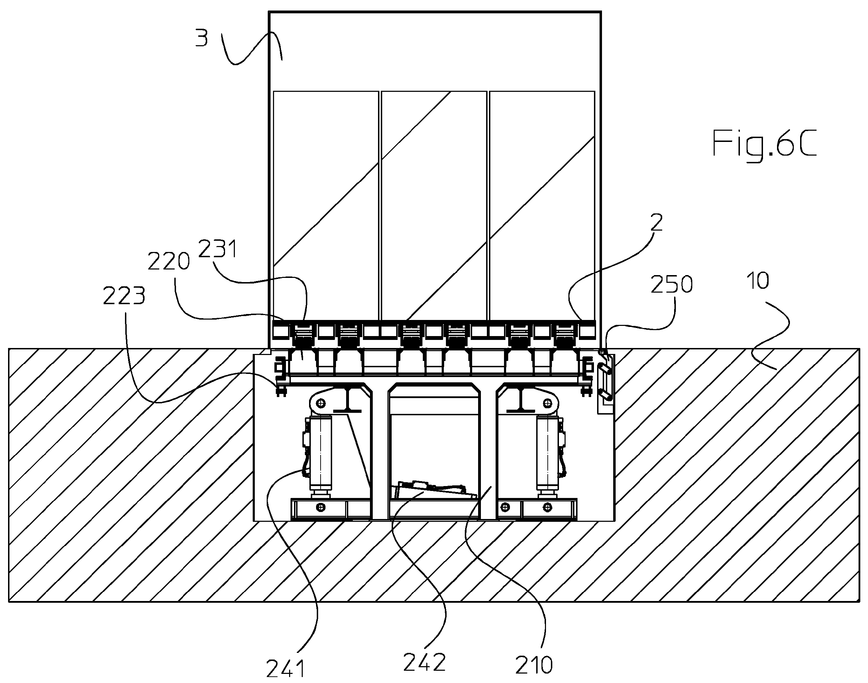

Figure 6C shows a cross-section along the line C-C with device 201 in a position in which forks 231 take up an extended position and lift pallets 2 from support surface S. Transport sub-frame 230 can now be moved over transport frame 220 in the direction of displacement. Forks 231 lift pallets 2 and can roll over travel surfaces 221 and over the loading floor into trailer 3.

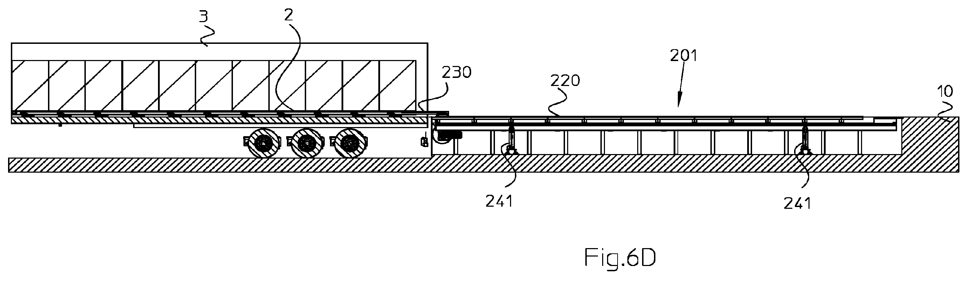

Figure 6D illustrates a longitudinal section through dock 10, device 201 and trailer 3. Transport sub-frame 230 is situated in trailer 3 in the extreme position in the direction of displacement. Forks 231 are then moved to the retracted position, after which they can roll back over travel surfaces 221 until transport sub-frame 230 once again rests wholly on transport frame 220. Pallets 2 remain behind in trailer 3.

It will be apparent that the device according to the invention is also suitable for displacing product carriers from a location to the support surface of the device. In the above described embodiment the operations during unloading of pallets 2 from trailer 3 will take place in reverse order.

Figures 7A-7C show a third preferred embodiment of the device according to the invention. Figure 7A shows device 301 with pallets 2. Figure 7B shows device 301 in rest position and Figure 7C shows device 301 in the transport position.

Device 301 can travel independently and comprises a chassis 302 with wheels 303, a steering device and a drive, for instance a diesel engine or an electric motor. A straddle carrier known in the relevant field can be used as basis herefor. Device 301 is further provided with a transport frame 320 and a transport sub-frame 330 according to the invention. The chassis forms a support surface S with openings for co-action with travel surfaces 321 and forks 331. Levelling system 340 provides for levelling of the travel surfaces of the transport frame with a floor of a loading/unloading location. Mobile device 301 can displace pallets into and out of a vehicle and move them to any other stationary or mobile location.

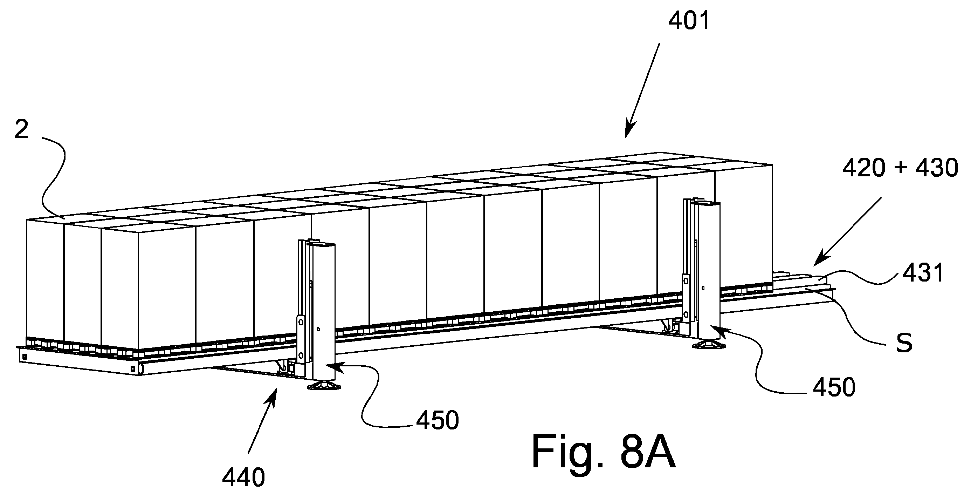

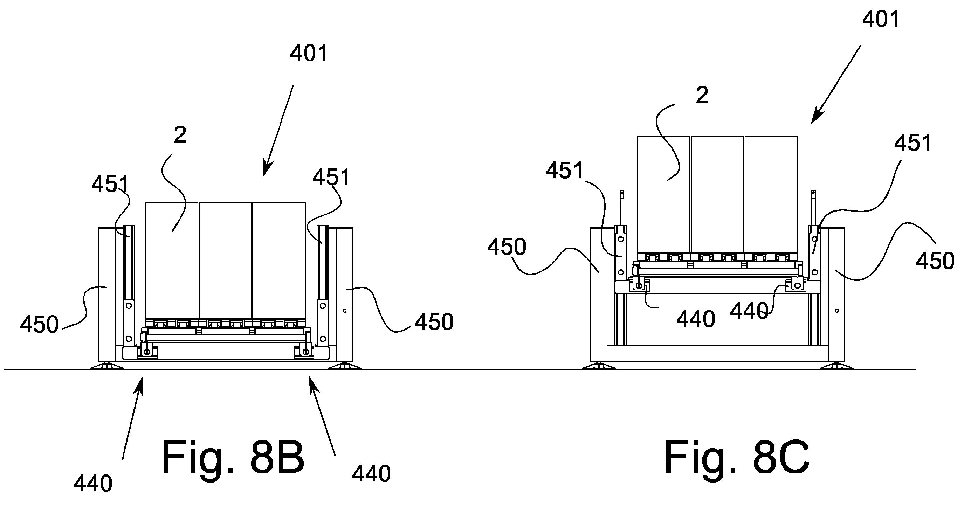

Figures 8A to 8C show a fourth preferred embodiment of the device according to the invention. Figure 8A shows device 401 with pallets 2. Figure 8B shows device 401 in rest position and Figure 8C shows device 401 in the transport position.

Device 401 is provided with a transport frame 420 according to the invention (as shown in figures 4A and 4B) and a transport sub-frame 430 according to the invention (as shown in figures 5A and 5B) and is provided with means 450 for supporting on a ground surface.

Means 450 are further configured to lift transport frame 420 and transport sub-frame 430 in the lifting direction. In the shown preferred embodiment the means comprise legs 450 and lifting cylinders 451.

Levelling system 440 provides for levelling of the travel surfaces of the transport frame with a floor of a loading/unloading location, such as a vehicle. Device 401 is provided with a support surface S with openings for co-action with the travel surfaces and the forks 431 driven by third drive means.

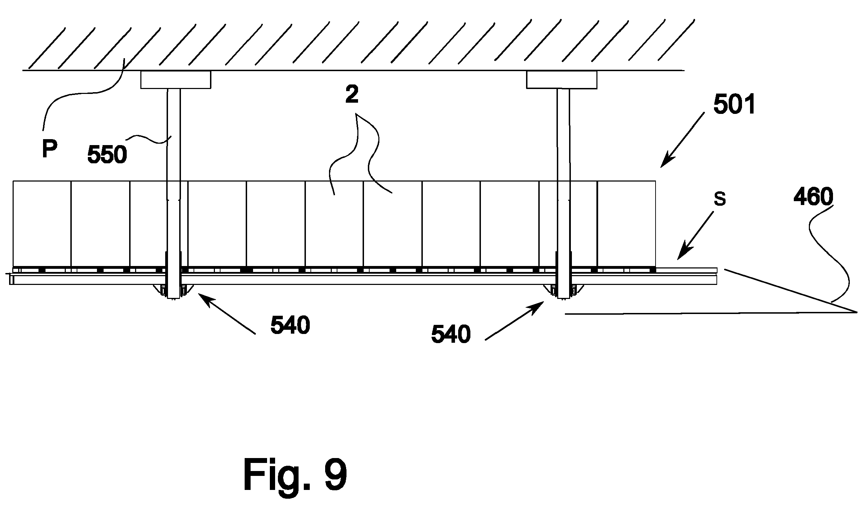

Figure 9 shows a fifth preferred embodiment of the device according to the invention 501 with pallets 2.

Device 501 is provided with a transport frame 520 according to the invention (as shown in figures 4A and 4B) and a transport sub-frame 530 according to the invention (as shown in figures 5A and 5B) and is provided with means 550 for suspended mounting on a surface, for instance a portal or ceiling P. Means 550 are further configured to lift transport frame 520 and transport sub-frame 530 in the lifting direction. In the shown preferred embodiment the means comprise legs and lifting cylinders. Levelling system 540 provides for levelling of the travel surfaces of the transport frame with a floor of a loading/unloading location, such as a vehicle. Device 501 is provided with a support surface S with openings for co-action with the travel surfaces and the forks driven by third drive means. A sloping ramp 460 can be placed adjacently of device 501 in order to make the device accessible to for instance forklift trucks.

According to a further preferred embodiment, levelling means 440 and/or 540 are configured to bring the support surface and the travel surfaces level with the floor of a loading/unloading location, such as a vehicle.

The starting point of the present invention is formed by the assembly of the transport frame and the transport sub-frame and associated first and second drive means, as described in the preamble of claim 1. An assembly is provided with co-acting forks and fork-like travel surfaces as shown in figures 4A and 5A. This assembly can be applied in diverse variants of the device, both stationary and mobile variants, wherein a support surface and third drive means are added in accordance with claim 1.

The scope of protection sought is expressly not limited to the shown and described preferred embodiments, but extends particularly to any combination thereof and extends generally to any embodiment falling within the text of the claims, as seen in the light of the foregoing description and accompanying drawings.

## Claims

1. Device for displacing product carriers (2) such as pallets between the device and a location, such as a vehicle, comprising:
a) a transport frame (20; 120; 220; 320; 420; 520) extending in a direction of displacement (H);
b) a transport sub-frame (30; 130; 230; 330; 430; 530) which is movably connected to the transport frame (20; 120; 220; 320; 420; 520) and provided with a number of forks (31; 131; 231; 331; 431) for co-action with the product carriers, the forks comprising roller means (32) for forward movement over the transport frame;
c) first drive means (23) for driving the transport sub-frame relative to the transport frame in the direction of displacement;
d) second drive means (33, 34) for moving the forks relative to the transport frame in a lifting direction (V) which lies substantially perpendicular to the direction of displacement (H);
e) means (140; 240; 340; 440; 540) for bringing the transport frame level with a floor of the location;
whereby the transport frame (20; 120; 220; 320; 420; 520) comprises a number of generally elongate travel surfaces (21; 221; 321) for the roller means (32) of the forks; and wherein the levelling means are configured to bring the travel surfaces level with the floor of the location;
**characterized in that**
the device further comprises a support surface (S) for placing of the product carriers, which support surface is provided with generally elongate openings extending substantially in the direction of displacement; and
the device comprises third drive means (241, 242) for moving the travel surfaces with forks through the openings between a rest position, in which the travel surfaces with forks are situated below the level of the support surface, and a transporting position in which the forks protrude above the level of the support surface.

2. Device as claimed in claim 1, wherein the device comprises at least one stop (50) intended for the purpose of positioning the product carriers on the support surface.

3. Device as claimed in claim 1 or 2, wherein each travel surface is provided with a straight-line guide (22) for the roller means.

4. Device as claimed in claim 3, wherein the straight-line guide comprises an upright edge (22) placed substantially centrally on the travel surface (21) for co-action with the roller means extending on either side of the edge.

5. Device as claimed in any of the foregoing claims, wherein the roller means (32) are pivotable between a retracted position and an extended position, and the second drive means comprise a pull rod (33) for moving the roller means between the retracted position and the extended position.

6. Device as claimed in any of the foregoing claims, wherein the first drive means comprise a pin track (23) and wherein the transport frame (20) is provided on the sides with a rail (24) for guiding the transport sub-frame (30).

7. Device as claimed in any of the foregoing claims, wherein the levelling means (240; 340; 440; 540) are configured for automatic real-time correction of the position of the travel surfaces.

8. Device as claimed in claim 7, wherein the levelling means (240; 340; 440; 540) are laser-controlled.

9. Device as claimed in any of the foregoing claims, wherein the device is arranged recessed into a platform (10) such that the support surface (S) forms together with the platform a floor over which it is possible to travel.

10. Device as claimed in claim 9, wherein the support surface forms part of a support frame (110).

11. Device as claimed in any of the foregoing claims, wherein the levelling means (240; 340; 440; 540) are integrated into the device.

12. Device as claimed in claim 11, wherein the levelling means (240; 340; 440; 540) function at least partially as third drive means.

13. Device as claimed in any of the foregoing claims 1-10, wherein the levelling means (140) are present at the location.

14. Device as claimed in claim 13, wherein the device comprises a positioning surface (143) for a vehicle and the levelling means (140) are configured to bring the positioning surface level with the travel surfaces.

15. Device as claimed in any of the foregoing claims 1-8, wherein the device (301) is arranged on an independently drivable vehicle.

16. Device as claimed in any of the foregoing claims 1-8, wherein the device (401) is provided with means for supporting on a ground surface.

17. Device as claimed in any of the foregoing claims 1-8, wherein the device (501) is provided with means for suspended mounting on a surface.

18. Device as claimed in claim 16 or 17, wherein the levelling means (440; 540) are configured to bring the support surface (S) and the travel surfaces level with the floor.

## Patentansprüche

1. Vorrichtung zum Verlagern von Produktträgern (2), wie beispielsweise Paletten zwischen der Vorrichtung und einem Ort, beispielsweise einem Fahrzeug, umfassend:
a) einen Transportrahmen (20; 120; 220; 320; 420; 520), der sich in einer Verlagerungsrichtung (H) erstreckt;
b) ein Transporthilfsrahmen (30; 130; 230; 330; 430; 530), der beweglich mit dem Transportrahmen (20; 120; 220; 320; 420; 520) verbunden ist und mit einer Anzahl von Gabeln (31 ; 131; 231; 331; 431) versehen ist für ein Zusammenwirken mit den Produktträgern, wobei die Gabeln Rollenmittel (32) zur Vorwärtsbewegung über den Transportrahmen umfassen;
c) eine erste Antriebseinrichtung (23) zum Antrieb des Transporthilfsrahmens relativ zu dem Transportrahmen in Richtung der Verlagerung;
d) eine zweite Antriebseinrichtung (33, 34) zum Bewegen der Gabel gegenüber dem Transportrahmen in einer Heberichtung (V), die im Wesentlichen senkrecht zur Verlagerungsrichtung (H) liegt;
e) Nivelliermittel (140; 240; 340; 440; 540), um den Transportrahmen auf das Niveau des Bodens des Ortes zu bringen;
wobei der Transportrahmen (20; 120; 220; 320; 420; 520) eine Anzahl von im Wesentlichen langgestreckten Laufflächen (21; 221; 321) für die Rollenmittel (32) der Gabeln umfasst und wobei die Nivelliermittel konfiguriert sind, um die Laufflächen auf das Niveau des Bodens zu bringen; **dadurch gekennzeichnet, dass** die Vorrichtung ferner eine Auflagefläche (S) zum Aufbringen der Produktträger umfasst, wobei die Auflagefläche mit im Wesentlichen länglichen Öffnungen versehen ist, die sich im Wesentlichen in der Verlagerungsrichtung erstrecken und die Vorrichtung dritte Antriebsmittel (241, 242) umfasst, um die Laufflächen mit Gabeln durch die Öffnungen zwischen einer Ruheposition, in der die Laufflächen mit Gabeln sich unterhalb der Ebene der Auflagefläche befinden, und einer Transportposition zu bewegen, in der die Gabeln über das Niveau der Auflagefläche herausragen.

2. Vorrichtung nach Anspruch 1, wobei die Vorrichtung zumindest einen Anschlag (50) für den Zweck der Positionierung der Produktträger auf der Auflagefläche aufweist.

3. Vorrichtung nach Anspruch 1 oder 2, wobei jede Lauffläche mit einer Geradführung (22) für die Rollenmittel versehen ist.

4. Vorrichtung nach Anspruch 3, wobei die Geradführung eine senkrechte Kante (22) aufweist, die im Wesentlichen mittig auf der Lauffläche (21) zum Zusammenwirken mit den Rollenmitteln angeordnet ist, die sich über beide Seiten der Kante erstrecken.

5. Vorrichtung nach einem der vorhergehenden Ansprüche, wobei die Rollenmittel (32) zwischen einer eingezogenen Stellung und einer ausgezogenen Stellung schwenkbar sind und die zweiten Antriebsmittel eine Zugstange (33) umfassen, um die Rollenmittel zwischen der eingezogenen und der ausgezogenen Stellung zu bewegen.

6. Vorrichtung nach einem der vorhergehenden Ansprüche, wobei die ersten Antriebsmittel eine Stiftbahn (23) umfassen und wobei der Transportrahmen (20) an den Seiten mit einer Schiene (24) zum Führen des Transporthilfsrahmens (30) versehen ist.

7. Vorrichtung nach einem der vorhergehenden Ansprüche, wobei die Nivelliermittel (240; 340; 440; 540), für die automatische Echtzeit-Korrektur der Position der Laufflächen konfiguriert sind.

8. Vorrichtung nach Anspruch 7, wobei die Nivelliermittel (240; 340; 440; 540) lasergesteuert sind.

9. Vorrichtung nach einem der vorhergehenden Ansprüche, wobei die Vorrichtung in eine Plattform (10) eingelassen ist, so dass die Auflagefläche (S) zusammen mit der Plattform einen befahrbaren Boden bildet.

10. Vorrichtung nach Anspruch 9, wobei die Auflagefläche einen Teil eines Tragrahmens (110) bildet.

11. Vorrichtung nach einem der vorhergehenden Ansprüche, wobei die Nivelliermittel (240; 340; 440; 540) in das Gerät integriert sind.

12. Vorrichtung nach Anspruch 11, wobei die Nivelliermittel (240; 340; 440; 540) zumindest teilweise als dritte Antriebsmittel fungieren.

13. Vorrichtung nach einem der vorhergehenden Ansprüche 1-10, wobei die Nivelliermittel (140) an dem Ort vorhanden sind.

14. Vorrichtung nach Anspruch 13, wobei die Vorrichtung eine Positionierungsfläche (143) für ein Fahrzeug umfassen und die Nivelliermittel (140) konfiguriert sind, um die Positionierungsfläche in Höhe der Laufflächen zu bringen.

15. Vorrichtung nach einem der vorangehenden Ansprüche 1-8, wobei die Vorrichtung (301) auf einem selbstgetriebenen Fahrzeug angeordnet ist.

16. Vorrichtung nach einem der vorangehenden Ansprüche 1-8, wobei die Vorrichtung (401) mit Mitteln zum Abstützen auf einer Grundfläche versehen ist.

17. Vorrichtung nach einem der vorangehenden Ansprüche 1-8, wobei die Vorrichtung (401) mit Mitteln zur hängenden Montage an einer Oberfläche versehen ist.

18. Vorrichtung nach Anspruch 16 oder 17, wobei die Nivelliermittel (440; 540) konfiguriert sind, um die Auflagefläche (S) und die Laufflächen auf ein Niveau mit dem Boden zu bringen.

## Revendications

1. Dispositif pour déplacer des supports de produits (2) tels que des palettes entre le dispositif et un emplacement, par exemple un véhicule, comprenant:
a) un cadre de transport (20 ; 120 ; 220 ; 320 ; 420 ; 520) s'étendant dans une direction de déplacement (H) ;
b) un sous-cadre de transport (30 ; 130 ; 230 ; 330 ; 430 ; 530) relié de manière mobile au cadre de transport (20 ; 120 ; 220 ; 320 ; 420 ; 520) et qui est muni d'un certain nombre de fourches (31 ; 131 ; 231 ; 331 ; 431) destinées à coopérer avec les supports de produits, les fourches comprenant des moyens de roulement (32) pour un mouvement vers l'avant sur le cadre de transport ;
c) des premiers moyens d'entraînement (23) pour entraîner le sous-cadre de transport par rapport au cadre de transport dans la direction de déplacement ;
d) des deuxièmes moyens d'entraînement (33, 34) pour déplacer les fourches par rapport au cadre de transport dans une direction de levage (V) qui est sensiblement perpendiculaire à la direction de déplacement (H) ;
e) des moyens (140 ; 240 ; 340 ; 440 ; 540) pour amener le cadre de transport au niveau d'un plancher de l'emplacement,
le cadre de transport (20 ; 120 ; 220 ; 320 ; 420 ; 520) comprenant un certain nombre de surfaces de déplacement (21 ; 221 ; 321) généralement allongées pour les moyens de roulement (32) des fourches ; et les moyens de mise à niveau étant configurés pour amener les surfaces de déplacement au niveau du plancher de l'emplacement ; **caractérisé en ce que**
le dispositif comprend en outre une surface de support (S) pour placer les supports de produits, laquelle surface de support est pourvue d'ouvertures généralement allongées s'étendant sensiblement dans la direction de déplacement ;
le dispositif comprend des troisièmes moyens d'entraînement (241, 242) pour déplacer les surfaces de déplacement avec les fourches à travers les ouvertures entre une position de repos dans laquelle les surfaces de déplacement avec les fourches sont situées en dessous du niveau de la surface de support, et une position de transport dans laquelle les fourches dépassent au-dessus du niveau de la surface de transport.

2. Dispositif selon la revendication 1, dans lequel le dispositif comprend au moins une butée (50) destinée au positionnement des supports de produits sur la surface de support.

3. Dispositif selon la revendication 1 ou 2, dans lequel chaque surface de déplacement est pourvue d'un guide linéaire (22) pour les moyens de roulement.

4. Dispositif selon la revendication 3, dans lequel le guide linéaire comprend une arête verticale (22) placée sensiblement au centre sur la surface de déplacement (21) pour coopérer avec les moyens de roulement s'étendant de part et d'autre de l'arête.

5. Dispositif selon l'une quelconque des revendications précédentes, dans lequel les moyens de roulement (32) peuvent pivoter entre une position rétractée et une position déployée, et les deuxièmes moyens d'entraînement comprennent une tige de traction (33) pour déplacer les moyens de roulement entre la position rétractée et la position déployée.

6. Dispositif selon l'une quelconque des revendications précédentes, dans lequel les premiers moyens d'entraînement comprennent une broche de piste (23) et dans lequel le cadre de transport (20) est pourvu sur les côtés d'un rail (24) pour guider le sous-cadre de transport (30).

7. Dispositif selon l'une quelconque des revendications précédentes, dans lequel les moyens de mise à niveau (240 ; 340 ; 440 ; 540) sont configurés corriger automatique en temps réel la position des surfaces de déplacement.

8. Dispositif selon la revendication 7, dans lequel les moyens de mise à niveau (240 ; 340 ; 440 ; 540) sont contrôlés par laser.

9. Dispositif selon l'une quelconque des revendications précédentes, dans lequel le dispositif est disposé en retrait dans une plate-forme (10) de telle sorte que la surface de support (S) forme avec la plate-forme un plancher sur lequel il est possible de se déplacer.

10. Dispositif selon la revendication 9, dans lequel la surface de support fait partie d'un cadre de support (110).

11. Dispositif selon l'une quelconque des revendications précédentes, dans lequel les moyens de mise à niveau (240 ; 340 ; 440 ; 540) sont intégrés dans le dispositif.

12. Dispositif selon la revendication 11, dans lequel les moyens de mise à niveau (240 ; 340 ; 440 ; 540) agissent au moins en partie en tant que troisièmes moyens d'entraînement.

13. Dispositif selon l'une quelconque des revendications précédentes 1 à 10, dans lequel les moyens de mise à niveau (140) sont présents dans l'emplacement.

14. Dispositif selon la revendication 13, dans lequel le dispositif comprend une surface de positionnement (143) pour un véhicule et les moyens de mise à niveau (140) sont configurés pour amener la surface de positionnement au niveau des surfaces de déplacement.

15. Dispositif selon l'une quelconque des revendications précédentes 1 à 8, dans lequel le dispositif (301) est disposé sur un véhicule pouvant être conduit de manière indépendante.

16. Dispositif selon l'une quelconque des revendications précédentes 1 à 8, dans lequel le dispositif (401) est pourvu de moyens pour supporter une surface du sol.

17. Dispositif selon l'une quelconque des revendications précédentes 1 à 8, dans lequel le dispositif (501) est pourvu de moyens pour un montage suspendu sur une surface.

18. Dispositif selon la revendication 16 ou 17, dans lequel les moyens de mise à niveau (440 ; 540) sont configurés pour amener la surface de support (S) et les surfaces de déplacement au niveau du plancher.
